# EUROPEAN PATENT SPECIFICATION

(11) **EP 1 230 452 B1**
(45) Date of publication and mention of the grant of the patent: **01.10.2008**
(21) Application number: 00918470.6
(22) Date of filing: 28.03.2000
(51) Int. Cl.: D02G 3/00, C04B 14/38, D06M 13/00, D01F 11/06, C04B 20/10, C04B 16/06, E04C 5/01

(54) **SYNTHETIC FIBERS AND CEMENTITIOUS SYSTEMS INCLUDING SAME**
SYNTHETISCHE FASERN UND ZEMENT-BASIERTES SYSTEM MIT SOLCHEN FASERN
FIBRES SYNTHETIQUES ET SYSTEMES A BASE DE CIMENT COMPRENANT LESDITES FIBRES

(30) Priority: 07.04.1999 US 128126 P
(43) Date of publication of application: 14.08.2002
(73) Proprietor: Selivansky, Dror, Haifa 34608 (IL)
(72) Inventor: Selivansky, Dror, Haifa 34608 (IL)
(74) Representative: Schmitz, Jean-Marie
(86) International application number: PCT/US2000/008168
(87) International publication number: WO 2000/060150

(56) References cited:
- US-A- 5 399 195
- US-A- 5 589 265
- US-A- 5 855 663
- US-A- 6 001 476

## Description

The present invention introduces stacks of fiber staples for reinforcement of cementitious matrixes , synthetic fibers reinforced cementitious matrixes and methods of manufacturing fiber reinforced hardened cementitious composites, as is further described.

The present invention relates to specific fibers suited for use as secondary reinforcement materials of cementitious matrices in cementitious composites and, more particularly, melt spun synthetic fibers and precursor low orientation nylon fibers for use as secondary reinforcement materials in cementitious composites.

More particularly, the present invention relates to specifically to short cut melt spun synthetic fibers with improved efficiency for reinforcement of cementitious composites as a result of adjustment of their friction and surface tension characteristics to obtain superior fibers dispersion in the cementitious matrix and greater reinforcement and crack arresting efficiency. The present invention also specifically relates to precursor nylon fibers having a low degrees of crystallinity and orientation, and to upgraded precursor low orientation nylon fibers with improved efficiency for reinforcement of cementitious composites as a result of adjustment of their friction to obtain superior fibers dispersion in the cementitious matrix and greater reinforcement and crack arresting efficiency.

As is well known in the art, cementitious composites, such as concrete, are prone to self-induced cracking, as such composites are brittle by nature. Self-induced cracks readily propagate through concrete under relatively low stresses. Thus, concrete fails in tension by progressive crack development.

The concrete's actual low tensile strength is explained by the presence of flaws (microcracks and cracks) that propagate into bigger cracks under tension. To increase the concrete durability it is, therefore, important to minimize the presence of microcracks and cracks that are distributed therein, which weakens the concrete and reduces its durability.

When a mix of concrete, or any other mix of a cementitious composite, is placed (e.g., poured, molded, layered, sprayed, etc.), the solids, e.g., aggregates, fines and cement, therein begin to settle downward due to gravity. As the solids sink, water is displaced and forced to the surface as bleedwater. Plastic shrinkage cracking of the concrete occurs when the rate of water evaporation exceeds the rate of water displacement. Shrinkage stresses associated with early volume change account for the majority of all non-structural cracks in concrete. As mentioned above, these cracks, which are formed while the concrete mix settles, affect the strength and durability of the concrete during service. Therefore, in the common practice, concrete products are watered and cooled while hardening. However, as watering concrete products while hardening does not completely eliminate microcracks and cracks formation and calls for special care, the search for concrete additives which reduce cracks formation has begun.

The use of nylon fibers in the reinforcement of concrete is set forth in U.S. Pat. No. 3,645,961. This patent discloses the use of discrete fibers to form a blast resistance concrete. Other related publications include U.S. Pat. Nos. 5,456,752; 5,399,195; 4,693,749; 4,902,347; and SU Pat. No. 1,479,618.

The presence of nylon fibers in a concrete mix alter the process of solids settlement and water bleeding, and therefore reduce the internal tensile stresses that lead to plastic shrinkage cracking during the early volume changes of the concrete while hardening. The stress-induced microcracks that begin to form are bridged and intersected by the millions of evenly distributed fibers present in the cementitious matrix, and cracks propagation is therefore halted.

Thus, nylon fibers assist in the prevention of microcracks during settling of concrete, which microcracks form flaws which, long after settling and during service, tend to develop into bigger cracks and fractions, which weaken the concrete and reduce its durability. Nevertheless, it is important to ensure that the fibers, which constitute part of the total volume of the cementitious matrix of the concrete, will not be deteriorated during service, since the loss of internal volume strength and substance will weaken the whole concrete matrix. Thus, the requirements from nylon fibers used in concrete reinforcement are (i) efficiency in reducing microcracks formation during settling and (ii) high durability, i.e., prolonged service before deteriorating.

A substantial growth in the use of technical nylon fibers for concrete and cement reinforcement has taken place since the first trials in using nylon fibers for concrete reinforcement. Both nylon 6.6 (e.g., Du Pont Type 663 and Type 665, both are distributed by Kapejo Inc.) and nylon 6 (e.g., Alliedsignal Caprolan-RC, distributed by Nycon Inc.) prepared having technical nylon properties, are used in the art of concrete production as typical concrete secondary reinforcing fibers, aimed at combating the cracking of the concrete during the early plastic stages of its settling. The term "secondary reinforcement" is commonly used in the art of concrete production to indicate a reinforcement directed at prevention or reducing cracks associated with concrete settling.

U.S. Pat. No. 6,001,476 teaches production and use of upgraded nylon fibers for secondary reinforcement of concrete and reinforced cementitious composites including the fibers. Teachings of this patent focus on a method of upgrading the strength and durability of nylon fibers, typically textile nylon fibers, to render the fibers suitable for use in secondary reinforcement of a cementitious matrix of cementitious composites, such as concrete. This prior art patent does not teach the use of low orientation precursor nylon fibers.

Similarly absent from the teachings of this patent is the concept of increasing the friction between fibers and the cementitious matrix as a means of improving the reinforcement properties of the fibers. However, according to the mechanical behavior models for fiber reinforced concrete, the fibers discontinuously distributed in the cement system contribute to its load carrying capacity via load transformation to the fibers by shear deformation at the fiber/matrix interface. Therefore, following basic composite materials rules of mixture, the extensional strength and stiffness of the system increase as the fibers ultimate strength and modulus values increase. Thus, the greater the fiber strength, better the load supporting capacity and the longer the maximum possible length of stress supporting fibers in the matrix. The overall effect is therefore an increased tensile strength of the system. Accordingly, typical fibers for cement systems reinforcement are of the high strength type (e.g., steel, glass, asbestos, etc.). For the same reason, synthetic fibers that have been used for reinforcement of cementitious systems (e.g., Nylon such as "Nycon RC" - characterized by modulus of 5,170 Mpa, and tenacity of 896 Mpa, Polypropylene such as "Fibrin 23" characterized by modulus of 3,500 Mpa, and tenacity of 370 Mpa, and Polacrylonitrile such as "Dolanit 10" characterized by modulus of 19,000 Mpa, and tenacity of 1,030 Mpa) against plastic shrinkage cracking that take place within the setting period of the cement, are typically designed to have higher modulus and tensile strength relative to standard textile fibers.

The failure in cementitious systems is typically initiated by tensile fracture of the matrix that yields cracks propagating throughout the system. The role of the reinforcing fibers is in crack arresting and fracture toughening.

According to recent studies (Y. Geng and C.K.Y. Leung (1996) "Microstructural Study of Fiber/Mortar Interfaces During Fiber Debonding and Pull-out", J. Mater. Sci. 31:1285-1294 and (1997) "Fiber Reinforced Concrete" - reported by ACI Committee 544, American Concrete Institute, Ch 4, ACI 544 IR pg 39-57), the pull-out of fibers at the crack planes is the dominant factor in the reinforcement mechanism, because of the easy debonding of synthetic fibers in cementitious systems and their lower interfacial cohesion relative to the primary reinforcing, such as steel, glass and asbestos fibers.

This means that the fiber distribution in the matrix is an important parameter - controlling the required content in the matrix for crack reduction since the inter - fiber spacing contributes to the crack arresting efficiency (R. F. Zollo (1997) "Fiber reinforced concrete: an overview after thirty years of development", Seminar 24-62 Abredeen's world of concrete, pages 12-41). Accordingly, adjusting fiber/cementitious system and interfiber frictions offers the possibility of developing new fibers for secondary reinforcement of concrete from materials typically considered unsuitable according to prior art teachings.

U.S. Pat. No. 5,989,713 teaches fiber cross-sectional geometries that increase the surface area that is available for bonding with the cementitious matrix. The greater surface area per unit weight of reinforcing fibers increases their bonding strength and the efficiency of stress transformation from the matrix to the fibers. A greater fraction of the ultimate fiber strength is thereby utilized for load carrying and crack bridging prior to debonding and pull -out of the fibers from the matrix. Teachings of this patent do not include changing the modulus of the fibers to achieve this effect nor do they include increasing dispersability of the fiber within the system during mixing.

However, in practice the pull-out stresses on the fibers are much lower than their ultimate tensile strength and are controlled by the frictional forces between the fibers and the cementitious system matrix. Therefore the fiber's high strength and stiffness requirements that are generally deemed necessary in reinforcement of hardened concrete by strong fibers (i.e., steel, glass and asbestos) are actually not necessary in the case of secondary reinforcement by synthetic fibers.

Since the fiber to aggregate coefficient of friction is of the same nature as the standard fiber-to-metal (f/m) coefficient of friction f/m may be employed as a parameter to quantify a fiber's frictional interaction with the cementitious matrix.

The fiber/cementitious system frictional forces also determine the extent of fibers mixing and distribution within the cementitious system. Greater frictional forces overcome the interfiber cohesion and spread the fibers faster in the matrix during the mixing stage of the fibers in the fresh cement slurry. Accordingly, for effective mixing of the fibers in the cementitious system, fiber with surface properties which create high f/m coefficients of friction while keeping low fiber-to-fiber (f/f) coefficients of friction and interfilament cohesiveness are desirable.

Use of nylon, acrylic and polyvinyl alcohol fibers is taught by Goldfine's U.S. Pat. No. 3,645,961 in order to meet these criteria, however this patent does not teach any lubrication or surface treatment in order to improve surface properties of fiber.

Techniques for improvement of fibers mixability in the concrete by premoisturizing are taught by WO83/00324 but these teachings are limited to olefinic fibers.

Pretreatment procedures for polyolefin fibers, including polypropylene fibers in particular, for cementitious system reinforcement have been reported in the patent literature (e.g., U.S. Pat. No. 5,399,195). This patent teaches procedures for increasing the hydrophilic nature of the hydrophobic olefinic fibers and enhancing their dispersability and compatibility with the cementitious matrix. Procedures taught by this patent do not change the frictional characteristics of the fibers.

There is thus a widely recognized need for, and it would be highly advantageous to have, specific fibers suited for use as secondary reinforcement materials in cementitious composites, methods for producing the fibers, and cementitious composites containing the fibers devoid of the above limitations.

### SUMMARY OF THE INVENTION

The stack of fiber staples for reinforcement of a cementitious matrix such as concrete is described in claim 1, the synthetic fiber reinforced cementitious matrix is described in claim 2 , and the method of manufacturing a fiber reinforced hardened cementitious composite is described in claim 3 .

According to an aspect of the present invention there is provided a stack of fiber staples for reinforcement of a cementitious matrix such as concrete.

According to still an additional aspect of the present invention there is provided a fiber reinforced cementitious composite comprising a hardened cementitious matrix. The matrix includes staples of low orientation precursor nylon fibers characterized by an average birefringence value greater than 0.0350, but less than 0.0440.

According to another aspect of the present invention there is provided a method of manufacturing a reinforced hardened cementitious composite. The method comprises the steps of: (a) providing components of a cementitious matrix including a cementitious substance, water and staples of low orientation precursor nylon fibers being characterized by an average birefringence value greater than 0.0350, but less than 0.0440.

According to yet another aspect of the present invention there is provided a stack of fiber staples for reinforcement of a cementitious matrix such as concrete. The stack comprises melt spun fibers possessing a degree of molecular orientation characterized by birefringence values within the range of 0.0185 - 0.0440.

According to still an additional aspect of the present invention there is provided a synthetic fiber reinforced cementitious composite comprising a hardened cementitious matrix. The matrix includes staples of melt spun synthetic fibers, the fibers possessing a degree of molecular orientation characterized by birefringence values within the range of 0.0185 - 0.0440.

According to yet another additional aspect of the present invention there is provided a method of manufacturing a reinforced hardened cementitious composite. The method comprises the steps of: (a) providing components of a cementitious matrix including a cementitious substance, water and staples of melt spun synthetic fibers, the fibers possessing a degree of molecular orientation characterized by birefringence values within the range of 0.0185 - 0.0440; (b) mixing the components until the melt spun synthetic fibers become well dispersed therein; and (c) hardening the matrix.

According to still further features in the described preferred embodiments the fibers are characterized by inducing superior plastic cracking inhibition in terms of percent cracking reduction as determined by a restraint ring method to an extent such that 400 grams of the fibers per cubic meter of standard concrete ( 0.017 % by weight, or 0.033 % by volume) are equivalent or better in plastic cracking inhibition, than any item selected from the group consisting of: (a) 1,000 grams of standard acrylic fibers per cubic meter of the standard concrete (0.0417 % by weight or 0.0847 % by volume); and (b) 900 grams polypropylene fibers per cubic meter of the standard concrete (0.0375 % by weight or 0.100 % by volume).

According to still further features in the described preferred embodiments the fibers include a nylon substance selected from the group consisting of nylon 6.6, nylon 6, copolymer nylon 6.6, 6, copolymer nylon 6.6, 6.TA and nylon 6.4.

According to still further features in the described preferred embodiments the stack comprises at least one member of the group consisting of melt spun polypropylene fibers with birefringence values within the range of 0.0185 - 0.0230 and melt spun nylon fibers with birefringence values within the range of: 0.0350 - 0.0440

According to still further features in the described preferred embodiments the fibers are characterized by superior plastic cracking inhibition capacity while maintaining higher slump values relative to standard fibers for concrete and cementitious system reinforcement such that 400 grams of fibers per cubic meter of concrete reduces the degree of cracking of a cementitious matrix in the concrete relative to a non-reinforced equivalent cementitious matrix by more than 80 %, while reducing the slump of the reinforced concrete to less than 15 %.

According to still further features in the described preferred embodiments the fibers are characterized by superior plastic cracking inhibition capacity while maintaining higher slump values relative to standard fibers for concrete and cementitious system reinforcement such that 400 grams of fibers per cubic meter of concrete reduces a degree of cracking of a cementitious matrix in the concrete relative to a non-reinforced cementitious matrix by more than 90 %, while reducing the slump of the reinforced concrete to less than 9 %.

According to still further features in the described preferred embodiments the drawn yam fibers are polypropylene fibers and possess a degree of molecular orientation characterized by birefringence values within the range of 0.0185 - 0.0230.

According to still further features in the described preferred embodiments drawn yam fibers are nylon fibers and possess a degree of molecular orientation characterized by birefringence values within the range of 0.0350 - 0.0440.

The present invention successfully addresses the shortcomings of the presently known configurations by providing synthetic fibers with improved concrete reinforcing capabilities, cementitious composites containing the fibers and methods for producing the cementitious composites.

### DESCRIPTION OF THE PREFERRED EMBODIMENTS

The present invention is of melt spun synthetic fibers and precursor low orientation nylon fibers which can be used as secondary reinforcement materials in cementitious composites. The present invention is also of cementitious composites containing the fibers. Specifically, the present invention can be used to improve the efficiency of short cut fibers for reinforcement of cementitious composites via adjustment of their friction characteristics to obtain superior fibers dispersion in a cementitious matrix and greater reinforcement and crack arresting efficiency. Still specifically, the present invention can also be used to improve the efficiency with which short cut melt spun synthetic fibers reinforce cementitious composites by adjustment of their friction characteristics to obtain superior fibers dispersion in the cementitious matrix and greater reinforcement and crack arresting efficiency. Further specifically, the present invention can also be used to upgrade precursor nylon fibers with low degrees of crystallinity and orientation, low tenacity and modulus and high elongation characteristics to render them suitable for use in secondary reinforcement of cementitious composites.

Before explaining at least one embodiment of the invention in detail, it is to be understood that the invention is not limited in its application to the details of construction and the arrangement of the components set forth in the following description. The invention is capable of other embodiments or of being practiced or carried out in various ways. Also, it is to be understood that the phraseology and terminology employed herein is for the purpose of description and should not be regarded as limiting.

Reference is first made to the following testing and characterization methods which are referred to through this disclosure and the accompanying claims.

### Reinforced Cementitious Composite Analysis

### Crack reduction potential:

The restraint ring test method (FCB Cement and Concrete Institute, Trodenheim, Norway, report, ISBN No. 82-4060-6) is employed to measure crack reduction potential. A fiber dose of 400 gram/meter³ was used for the Acrylic fibers. The standard was polypropylene standard fibers at a dosage of 900 gram/meter³. This reflects typical polypropylene standard fibers use in the construction industry and served as a control. Standard fibers employed for each test are defined hereinbelow.

### Slump test:

The slump test performed in accordance with ASTM C 143 test specifications. The self leveling (slumping) tendency of the fresh concrete mixture was measured by comparing the heights of the originally molded cone of concrete with that of the residual form of the same concrete allowed to slump freely. Cones were 300 mm high with a 200 mm lower base diameter and a 100 mm upper base diameter. A standard slump cone was used for the test following the ASTM procedure.

For purposes of this specification and the accompanying claims, all numerical values are approximate and are intended to include values which are between 90 % and 110 % of the given value.

### LOW ORIENTATION PRECURSOR NYLON FIBERS

The present invention is, in part, a contradiction to the teachings of U.S. Patent No. 6,001,476. In contrast to that patent, in the present invention, the nylon fibers that are upgraded and rendered suitable for use for reinforcement of cementitious composites are "precursors" for the textile and technical types of nylon fibers. Use of these precursors is not taught by U.S. Patent No. 6,001,476 altogether. The precursor nylon fibers are intermediate products that usually undergo further drawing, texturizing and heat setting processes to achieve the required mechanical and textile properties of the final products. Elimination of these additional production steps is commercially desirable. The precursor nylon fibers are characterized by lower degrees of crystallinity and orientation, lower tenacity and modulus and higher elongation to break than textile nylon fibers. Table 6 below summarizes differences in some physical properties of precursor, textile and technical nylon fibers along with their different production conditions.

**Table 6**

| ***Comparison between different nylon fiber types*** | | | |
|---|---|---|---|
| **Parameter** | **Precursor** | **Textile** | **Technical** |
| Thickness | 1-20 (4) denier | 1-15 (3) denier | 5 - 20 (7) denier |
| Birefringence | 0.035 - 0.044 | 0.045 - 0.054 | 0.055 - 0.070 |
| | (0.040) | (0.050) | (0.060) |
| Tenacity | 2.5 - 3.4 (3.0) gram/denier | 3.5 - 5.0 (4.0) gram/denier | 7.0 - 11.0 (8.0) gram/denier |
| Elongation | 46 - 100 (75) % | 21 - 45 (40) % | 10 - 20 (15) % |
| Modulus | 10 -25 (10) gram/denier | 25 - 40 (35) gram/denier | 40 - 70 (55) gram/denier |
| Spinning Speed * (POY) | 3,000 - 4,500 m/min | 4,600 - 5,500 m/min | >5,500 m/min |
| Draw Ratio** (Drawn) | 1.5 - 3.0 X | 3.1 - 4.0 X | 5.0 - 8.0 X |

| | | | |
|---|---|---|---|
| * One step spinning of 40 - 80 RV polymers. ** Drawing of 40 RV polymer UD yam that was spun at 750 m/min. | | | |

It is apparent that as the molecular orientation (indicated here by birefringence) of the fibers increases, the mechanical properties shift from the precursor to the textile and further to the technical types of yarns.

Therefore, this aspect of the present invention is embodied by a stack of fiber staples for reinforcement of a cementitious matrix such as concrete. The stack includes low orientation precursor nylon fibers characterized by an average birefringence value greater than 0.0350, but less than 0.0440, an average modulus greater than 10 gram/denier, but less than 25 gram/denier, an average tenacity greater than 2.5 gram/denier, but less than 3.4 gram/denier, and an average elongation capacity greater than 46 %, but less than 100 %.

In some cases the fibers are impregnated with a chemical selected so as to obtain upgraded fibers characterized by increased chemical stability. As a result, the upgraded fibers acquire superior basic hydrolysis resistance. The chemical may be, for example, a salt that undergoes acid hydrolysis, benzene phosphonic acid, a manganese salt, a hindered phenol photo stabilizer, a hindered amine photo stabilizer, a phosphorous compound for ultraviolet stabilization, a phosphorous, amino and phenolic based antioxidants and copper iodide, copper acetate, potassium iodide, potassium bromide, zinc chloride and microsilica.

The fibers may include, for example, a nylon substance selected from the group consisting of nylon 6.6, nylon 6, copolymer nylon 6.6, 6, copolymer nylon 6.6, 6.TA and nylon 6.4.

There are two typical industrial methods that are practiced to produce the different yarns. The first method is referred to as "one step spinning". In this method, variable speeds are used for the production of different types of yarns. "Undrawn yarns" are produced at low spinning speeds, "Partially Oriented Yarns" (POY or Precursor nylon fibers) are produced at high spinning speeds and "Fully Oriented Yarns" (FOY or technical nylon fibers) at ultra high spinning speeds. The second method involves two steps, the low spinning speed of "Undrawn yarns" followed by at least one drawing stage that increases the fibers orientation to the desired level. Table 7 below provides examples of the full range of spinning speeds that yield corresponding different fiber types, including the "Precursor" type, in one step of spinning.

**Table 7**

| ***One step nylon 6.6 yarns spinning*** | | | | | |
|---|---|---|---|---|---|
| **Modulus gram/denier** | **Elongation %** | **Tenacity gram/denier** | **Birefringence Δn** | **Spinning Speed m/min** | **Polymer RV** |
| 4 | 287 | 1.15 | 0.021 | 750 | 40 |
| 4 | 234 | 1.35 | 0.024 | 1,000 | 40 |
| 6 | 125 | 2.35 | 0.030 | 2,000 | 40 |
| 10 | 78 | 3.21 | 0.039 | 3,000 | 40 |
| 15 | 60 | 3.70 | 0.043 | 4,000 | 40 |
| 35 | 43 | 4.50 | 0.045 | 5,000 | 40 |
| 5 | 175 | 1.53 | 0.027 | 750 | 80 |
| 5 | 172 | 1.84 | 0.032 | 1,000 | 80 |
| 8 | 117 | 2.75 | 0.035 | 2,000 | 80 |
| 10 | 104 | 3.35 | 0.041 | 3,000 | 80 |
| 12 | 92 | 3.44 | 0.043 | 4,000 | 80 |
| 48 | 19 | 6.13 | 0.048 | 5,000 | 80 |

Table 8 illustrates low speed "Undrawn" yarns of polymer RV values 40 and 80, spun at 750 and 1,000 m/min and drawn to the "precursor" fibers range

**Table 8**

| ***Two steps spin - draw of nylon 6.6 yarns*** | | | | | |
|---|---|---|---|---|---|
| **Polymer RV** | **Spinning Speed m/min** | **Draw Ratio X** | **Tenacity gram/denier** | **Elongation %** | **Modulus gram/denier** |
| 40 | 750 | 2.75 | 3.40 | 64 | 16 |
| 80 | 750 | 1.90 | 3.40 | 72 | 14 |
| 40 | 1,000 | 2.32 | 3.40 | 62 | 17 |
| 80 | 1,000 | 1.81 | 3.80 | 57 | 19 |

The "Precursor nylon fibers", defined in Table 6 and obtained as described in Tables 7 and 8, were previously used mainly as feed yarns for the draw texturizing process for production of textured textile yarns, and for a sequential (continuous) or two step (separate) drawing processes to produce flat (uncrimped) textile or technical yarns. Prior to the present invention, these fibers were not used in final textile type of products, nor in concrete reinforcement, or in other applications, because of their relatively low strength and stability.

However, as will be explained hereinbelow, the lower orientation of the precursor nylon fibers relative to the textile fibers, and their corresponding lower modulus and bending rigidity, as well as greater elongation to break and extendibility, turned out to favorably affect their reinforcement efficiency with respect to concrete in contrast to prior art teachings.

In contrast to expectations, the more flexible fibers mix much more easily in a cementitious composite and conform more easily to different spaces between the aggregates of the composite. This results in improved mixing and distribution within the inter-aggregate spaces, which proved very beneficial to the fibers' cementitious matrix cracking inhibition capacity. The extendibility and toughness of the lower modulus nylon fibers allow for absorption of strain and impact energy by stretching under the plastic shrinkage and crack propagating stresses in the system, reinforcing the matrix more effectively.

According to the adhesion theory of friction, fibers of lower modulus generate greater friction with the cementitious systems aggregates due to the increased true contact area between the sliding surfaces. These frictional forces greatly affect the fiber distribution efficiency within the cementitious composite and increase also the efficiency of interfacial shear forces transfer to the fibers during crack arresting.

Nylon fibers of lower degrees of amorphous orientation absorb more water and cement active ingredients. Therefore, they swell to a greater extent and form tighter bonds with the surrounding matrix.

The flowability of fibers containing cementitious composites is reciprocally proportional to the fibers' stiffness. Therefore, cementitious composites reinforced by flexible fibers of lower modulus and higher elongation should possess flow properties superior to those of standard (commercially available) fibers for reinforcement of concrete. The workability of the composite is improved and is characterized by higher slump, better placeability, compatibility and finishability of the concrete, better flow through pipes, plasticization, hole filling, spreadability, adhesion to the wall and cohesiveness in mortars and other fine aggregate cementitious composites.

The precursor fibers that were produced according to Tables 7 and 8 were cut to 12 mm length and evaluated for plastic cracking reduction potential following FCB Cement and Concrete Institute, Trodenheim, Norway, report ISBN No. 82-4060-6 using a constant fibers dose of 400 grams/cubic meter of concrete.

Tables 9 and 10 report the crack reduction % relative to the POY and Drawn Yarns that were described in Tables 7 and 8 and were employed here as controls.

**Table 9**

| ***POY nylon 6.6 for superior crack inhibition performance*** | | | | | | |
|---|---|---|---|---|---|---|
| **Crack Reduction %** | **Modulus gram/denier** | **Elongation %** | **Tenacity gram/denier** | **Birefringence Δn** | **Spinning Speed m/min** | **Polymer RV** |
| 25 | 4 | 287 | 1.15 | 0.021 | 750 | 40 |
| 50 | 4 | 234 | 1.35 | 0.024 | 1,000 | 40 |
| 73 | 6 | 125 | 2.35 | 0.030 | 2.000 | 40 |
| 85 | 10 | 78 | 3.21 | 0.039 | 3,000 | 40 |
| 81 | 15 | 60 | 3.70 | 0.043 | 4,000 | 40 |
| 75 | 35 | 43 | 4.50 | 0.045 | 5,000 | 40 |
| 55 | 5 | 175 | 1.53 | 0.027 | 750 | 80 |
| 65 | 5 | 172 | 1.84 | 0.032 | 1,000 | 80 |
| 75 | 8 | 117 | 2.75 | 0.035 | 2,000 | 80 |
| 88 | 10 | 104 | 3.35 | 0.041 | 3,000 | 80 |
| 85 | 12 | 92 | 3.44 | 0.043 | 4,000 | 80 |
| 60 | 48 | 19 | 6.13 | 0.048 | 5,000 | 80 |

| | | | | | | |
|---|---|---|---|---|---|---|
| Spin finish - 0.60 % BK 2170 made by Henkel KGaA, Germany. | | | | | | |

**Table 10**

| ***Drawn nylon 6.6 yarns for superior crack inhibition performance*** | | | | | | |
|---|---|---|---|---|---|---|
| **Polymer RV** | **Spinning Speed m/min** | **Draw Ratio X** | **Tenacity gram/denier** | **Elongation %** | **Modulus gram/den.** | **Crack Reduction %** |
| 40 | 750 | 2.75 | 3.40 | 64 | 16 | 80 |
| 80 | 750 | 1.90 | 3.40 | 72 | 14 | 83 |
| 40 | 1,000 | 2.32 | 3.40 | 62 | 17 | 78 |
| 80 | 1,000 | 1.81 | 3.80 | 57 | 19 | 73 |

| | | | | | | |
|---|---|---|---|---|---|---|
| Spin finish - 0.60 % BK 2170 made by Henkel KGaA. Germany. | | | | | | |

The results summarized in Table 9 indicate increased plastic cracking reduction capacity at low fiber orientation values. Excellent results are obtained with typical precursor fibers that were produced at spinning speeds between 3,000 and 4,500 m/min.

The results summarized in Table 10 indicate that adjustment of the draw ratios in a standard drawing operation of undrawn nylon yarns to obtain drawn yarns of low tenacity and modulus and high elongation, brings about fibers of improved plastic crack reduction potential.

Accordingly, the precursor nylon fibers of the present invention provide an additional range of fiber orientation and mechanical properties relative to that offered by the textile nylon yarns of U.S. Pat. No. 6,001,476. These fibers offer a significant reduction in the degree of plastic cracking in cementitious composites.

This aspect of the present invention is further embodied by a fiber reinforced cementitious composite comprising a hardened cementitious matrix including staples of low orientation precursor nylon fibers. The fibers are characterized by an average birefringence value greater than 0.0350, but less than 0.0440.

A method of manufacturing a reinforced hardened cementitious composite is also embodied by this aspect of the invention. The method includes three steps. The first step includes providing components of a cementitious matrix including a cementitious substance, water and staples of low orientation precursor nylon fibers being characterized by an average birefringence value greater than 0.0350, but less than 0.0440. The second step includes mixing the components until the fibers become well dispersed. The third step includes hardening the matrix.

### MELT SPUN FIBERS

The process of melt spinning may be applied to a wide range of polymeric fibers. Experimental data using polypropylene is presented here as a non-limiting example. Spinning conditions, orientation, mechanical properties and Crack Reduction potential of POY type of polypropylene fibers are given in Table 11

**Table 11**

| ***POY polypropylene for superior crack inhibition performance*** | | | | | |
|---|---|---|---|---|---|
| **Spinning Speed m/min** | **Birefringence Δn** | **Tenacity gram/denier** | **Elongation %** | **Modulus gram/denier** | **Crack Reduction %** |
| 750 | 0.0125 | 1.3 | 550 | 10 | 15 |
| 1,000 | 0.0145 | 1.7 | 350 | 14 | 40 |
| 2,000 | 0.0185 | 2.1 | 225 | 18 | 50 |
| 3,000 | 0.0210 | 2.7 | 125 | 22 | 65 |
| 4,000 | 0.0225 | 3.0 | 50 | 27 | 69 |
| 5,000 | 0.0230 | 3.7 | 30 | 30 | 65 |
| 6,000 | 0.0235 | 5.2 | 10 | 48 | 60 |

These results point out the trend of improved crack reduction efficiency for fibers of lower levels of orientation, lower tenacity and modulus and greater elongation values while maintaining the tenacity above a minimum value required to reinforce the matrix. Accordingly, parameters for spinning and resultant properties of polypropylene fibers of the invention are recommended as follows.

Preferred embodiments according to this aspect of the present invention include a stack of fiber staples for reinforcement of a cementitious matrix such as concrete. The stack comprises melt spun fibers possessing a degree of molecular orientation characterized by birefringence values within the range of 0.0185 - 0.0440. The stack includes, for example, melt spun polypropylene fibers with birefringence values within the range of 0.0185 - 0.0230 or melt spun nylon fibers with birefringence values within the range of: 0.0350 - 0.0440. The stack of fiber staples may be further characterized by a modulus greater than 18 gram/denier but less than 35 gram/denier, more preferably greater than 22.00 gram/denier but less than 27.00 gram/denier and most preferably 27 gram/denier, and a tenacity greater than 2.1 gram/denier but less than 3.7 gram/denier, more preferably greater than gram/denier 2.70 but less than 3.00 gram/denier and most preferably 3.00 gram/denier, and an elongation capacity greater than 30 % but less than 225 %, more preferably greater than 50 % but less than 125 % and most preferably 90 %.

According to preferred embodiments the drawn yam fibers are polypropylene fibers and possess a degree of molecular orientation characterized by birefringence values within the range of 0.0185 - 0.0230. According to other preferred embodiments the drawn yarn fibers are nylon fibers and possess a degree of molecular orientation characterized by birefringence values within the range of 0.0350 - 0.0440.

Drawn polypropylene fibers suitable for use as part of the present invention can also be obtained via low speed spinning and sequential drawing, either continuously or in two separate operations. Table 12 summarizes the spinning conditions, orientation, mechanical properties and crack reduction potential of the drawn polypropylene fibers.

**Table 12**

| ***Drawn polypropylene yarns for superior crack inhibition performance*** | | | | | |
|---|---|---|---|---|---|
| **Spinning Speed m/min** | **Draw Ratio X** | **Tenacity gram/denier** | **Elongation %** | **Modulus gram/denier** | **Crack Reduction %** |
| 787 | 2.0 | 2.00 | 248 | 18 | 40 |
| 787 | 2.5 | 2.80 | 126 | 20 | 65 |
| 787 | 3.0 | 3.35 | 55 | 22 | 73 |
| 787 | 3.5 | 3.80 | 30 | 27 | 68 |
| 787 | 4.0 | 4.60 | 15 | 43 | 60 |

The results summarized in Table 12 indicate that adjustments of the draw ratios in a standard drawing operation of typical As-spun polypropylene to obtain drawn yarns of lower tenacity and modulus and higher elongation than the standard technical fibers, bring about fibers of improved concrete crack reduction potential.

Test methods for cracking resistance were the restraint ring test and the slump test methods described hereinabove.
Standard concrete mix proportions (Kg/m³):

| | |
|---|---|
| Crushed aggregates | 800 |
| Fine crushed aggregates | 300 |
| Sand | 600 |
| Cement | 400 |
| Water | 223 |

Experimental concrete mixtures include Fibers as specified in Table 14. Three mixes were prepared and tested for slump and restraint ring plastic shrinkage cracking.

**Table 14**

| ***Experimental concrete mix compositions*** | | | |
|---|---|---|---|
| **Mix No.** | **Fiber Type** | **Fiber length** | **Content(Kg/m³)** |
| 1 | No fibers | | |
| 2 | BKM (Invention) | 19 mm | 0.4 |
| 3 | 6922* | 19 mm | 0.9 |

| | | | |
|---|---|---|---|
| * 6922 - "Stealth 6922" commercial polypropylene fibers produced by Fibermesh for reduction of plastic shrinkage cracking in cementitious systems. | | | |

**Table 15**

| ***Results of slump and crack reduction tests*** | | | | | |
|---|---|---|---|---|---|
| **Mix No.** | **Slump mm** | **Total** | **Inside** | **Outside** | **Crack Reduction %** |
| 1 | 175 | 1669.0 | 559.0 | 1100.0 | 0 |
| 2 | 160 | 83.0 | 17.0 | 66.0 | 95.0 |
| 3 | 150 | 333.0 | 121.0 | 210.0 | 80.0 |

Table 14 indicates that the fibers of the invention are superior to the commercial standard fibers in terms of plastic crack reduction and that they affect the slump of the concrete to a smaller extent.

The fibers are characterized by superior plastic cracking inhibition capacity while maintaining higher slump values relative to standard fibers for concrete and cementitious system reinforcement such that 400 grams of fibers per cubic meter of concrete reduces the degree of cracking of a cementitious matrix in the concrete relative to a non-reinforced equivalent cementitious matrix by more than 80 %, while reducing the slump of the reinforced concrete to less than 15 %.

In some preferred embodiments fibers are characterized by superior plastic cracking inhibition capacity while maintaining higher slump values relative to standard fibers for concrete and cementitious system reinforcement such that 400 grams of fibers per cubic meter of concrete reduces a degree of cracking of a cementitious matrix in the concrete relative to a non-reinforced cementitious matrix by more than 90 %, while reducing the slump of the reinforced concrete to less than 9 %.

According to additional preferred embodiments a synthetic fiber reinforced cementitious composite comprising a hardened cementitious matrix is provided. The matrix includes staples of melt spun synthetic fibers, the fibers possessing a degree of molecular orientation characterized by birefringence values within the range of 0.0185 - 0.0440.

According to additional preferred embodiments a method of manufacturing a reinforced hardened cementitious composite is disclosed. The method comprises three steps. The first step includes providing components of a cementitious matrix including a cementitious substance, water and staples of melt spun synthetic fibers, the fibers possessing a degree of molecular orientation characterized by birefringence values within the range of 0.0185 - 0.0440. The second step includes mixing the components until the melt spun synthetic fibers become well dispersed therein. The third step includes hardening the matrix.

With regard to precursor nylon fibers and melt spun synthetic fibers of the present invention, the fibers are typically characterized by an average cut length of greater than 2 mm and less than 50 mm and an average thickness of greater than 1 denier and less than 25 denier although other lengths and thicknesses are within the scope of the invention.

With regard to precursor nylon fibers and melt spun synthetic fibers of the present invention, the fibers are crimped in some instances and straight in other instances.

### CONCLUDING REMARKS

The fibers of the present invention are substantially different from prior art concrete and cementitious systems reinforcing fibers because they possess unique surface and mechanical properties as a result of either surface coatings or reduced modulus. The fibers of the present invention offer faster and easier mixing of the fibers in both the wet cementitious system and in dry cementitious premix systems. The fibers of the present invention also offer better dispersion and compatibility of the fibers in concretes, mortars and other fine aggregates cementitious systems. Hardened cementitious composites prepared using the fibers of the present invention are characterized by a lower degree of plastic cracking at lower fiber concentrations, a lower degree of delayed cracking, a lower degree of plastic and delayed shrinkage, greater impact resistance, better flexural strength at equivalent doses of fibers, and greater extendibility and higher strain levels before cracking. In addition, higher contents of fibers in the cementitious systems are achievable more easily, improving the crack arresting, toughness and flexural strength of the reinforced systems.

Although the invention has been described in conjunction with specific embodiments thereof, it is evident that many alternatives, modifications and variations will he apparent to those skilled in the art. Accordingly, it is intended to embrace all such alternatives, modifications and variations that fall within the spirit and broad scope of the appended claims.

## Claims

1. A stack of fiber staples for reinforcement of a cementitious matrix such as concrete, the stack comprising at least one member of the group consisting of melt spun polypropylene fibers with birefringence values within the range of 0.0185-0.0230 and melt spun nylon fibers with birefringence values within the range of 0.0350-0.0440.

2. A synthetic fiber reinforced cementitious composite comprising a hardened cementitious matrix, wherein said matrix including staples of melt spun polypropylene fibers with birefringence values within the range of 0.0185-0.0230 and melt spun nylon fibers with birefringence values within the range of 0.0350-0.0440.

3. A method of manufacturing a reinforced hardened cementitious composite comprising the steps of:
(a) providing components of a cementitious matrix including a cementitious substance, water and staples of melt spun synthethic fibers, said fibers comprising at least one member of the group consisting of melt spun polypropylene fibers with birefringence values within the range of 0.0185-0.0230 and melt spun nylon fibers with birefringence values within the range of 0.0350-0.0440
(b) mixing said components until said melt spun synthetic fibers become well dispersed therein; and
(c) hardening said matrix.

## Patentansprüche

1. Paket Faserstapel zur Verstärkung einer zementartigen Matrix, wie etwa Beton, wobei das Paket mindestens ein Element der Gruppe umfasst, die aus schmelzgesponnenen Polypropylenfasen mit Doppelbrechungswerten im Bereich von 0,0185 - 0,0230 und schmelzgesponnenen Nylonfasern mit Doppelbrechungswerten im Bereich von 0,0350 - 0,0440 besteht.

2. Mit Chemiefasern verstärkter zementartiger Verbundstoff, der eine gehärtete zementartige Matrix umfasst, wobei die Matrix Stapel von schmelzgesponnenen Polypropylenfasen mit Doppelbrechungswerten im Bereich von 0,0185 - 0,0230 und schmelzgesponnenen Nylonfasern mit Doppelbrechungswerten im Bereich von 0,0350 - 0,0440 enthält.

3. Verfahren zur Herstellung eines verstärkten gehärteten zementartigen Verbundstoffes, folgende Schritte umfassend:
(a) Bereitstellen von Komponenten einer zementartigen Matrix, die eine zementartige Substanz, Wasser und Stapel von schmelzgesponnenen Chemiefasern enthält, wobei die Fasern mindestens ein Element der Gruppe umfassen, die aus schmelzgesponnenen Polypropylenfasen mit Doppelbrechungswerten im Bereich von 0,0185 - 0,0230 und schmelzgesponnenen Nylonfasern mit Doppelbrechungswerten im Bereich von 0,0350 - 0,0440 besteht,
(b) Mischen der Komponenten, bis die schmelzgesponnenen Synthesefasern darin ganz dispergiert sind, und
(c) Härten der Matrix.

## Revendications

1. Pile de filaments de fibres destinée au renforcement d'une matrice bitumeuse telle que le ciment, la pile comprenant au moins un élément du groupe constitué par les fibres de polypropylène filées à chaud avec des valeurs de biréfringence dans la plage de 0,0285 à 0,0230 et des fibres de nylon filées à chaud avec des valeurs de biréfringence dans la plage de 0,0350 à 0,0440.

2. Composite bitumeux renforcé par des fibres synthétiques qui comprend une matrice bitumeuse durcie, ladite matrice comprenant des filaments de fibres de polypropylène filées à chaud avec des valeurs de biréfringence dans la plage de 0,0185 à 0,0230 et de fibres de nylon filées à chaud avec des valeurs de biréfringence dans la plage de 0,0350 à 0,0440.

3. Procédé de fabrication d'un composite durci renforcé qui comprend les étapes consistant à :
(a) fournir les composants d'une matrice bitumeuse comprenant une substance bitumeuse, de l'eau et des filaments de fibres synthétiques filées à chaud, lesdites fibres comprenant au moins un élément du groupe constitué par les fibres de polypropylène filées à chaud avec des valeurs de biréfringence dans la plage de 0,0185 à 0,0230 et des fibres de nylon filées à chaud avec des valeurs de biréfringence dans la plage de 0,0350 à 0,0440 ;
(b) le mélange desdits composants jusqu'à ce que lesdites fibres synthétiques filées à chaud soient bien dispersés à l'intérieur de celui-ci ; et
(c) le durcissement de ladite matrice.
